# EUROPEAN PATENT APPLICATION

(11) **EP 3 845 679 A1**
(43) Date of publication of application: **07.07.2021**
(21) Application number: 19873858.5
(22) Date of filing: 16.10.2019
(51) Int. Cl.: C22C 38/00, C21D 9/46, C22C 38/06, C22C 38/60

(54) **STEEL SHEET AND MANUFACTURING METHOD THEREFOR**

(30) Priority: 18.10.2018 JP 2018196829
(71) Applicant: JFE Steel Corporation, Tokyo 100-0011 (JP)
(72) Inventor: ONO Yoshihiko, Tokyo 100-0011 (JP); TAKASHIMA Katsutoshi, Tokyo 100-0011 (JP); TOBATA Junya, Tokyo 100-0011 (JP); MATSUI Yoichiro, Tokyo 100-0011 (JP)
(74) Representative: Haseltine Lake Kempner LLP
(86) International application number: PCT/JP2019/040682
(87) International publication number: WO 2020/080407

(57) **Abstract**

A steel sheet and a method for producing the same are provided. In the present invention, a steel sheet has a specific chemical composition and a microstructure. In the microstructure, ferrite is present in an amount of 6 to 90% in terms of an area fraction, a constituent formed of one or more of upper bainite, fresh martensite, tempered martensite, lower bainite, and retained γ is present in an amount of 10 to 94% in terms of an area fraction, and retained γ is present in an amount of 3 to 15% in terms of a volume fraction; a total area fraction, denoted as S_{C-enriched}, of regions that have a C concentration of 0.6 to 1.3% and where an adjacent region is formed of upper bainite having a minor axis width of 0.7 to 10 µm, an aspect ratio of greater than 2.0, and a C concentration of 0.07% or less is 0.1 to 5%; a total area fraction, denoted as S_{γBlock}, of fresh martensite having an equivalent circular grain diameter of 1.5 to 15 µm and an aspect ratio of 3 or less and/or retained γ grains having an equivalent circular grain diameter of 1.5 to 15 µm and an aspect ratio of 3 or less is 5% or less (and 0% or greater); and prior γ in a surface layer has a grain diameter of 2 to 12 µm.

## Description

### Technical Field

The present invention relates to a steel sheet that can be preferably applied for press forming application, that is, that can be used via a press forming step for automobiles, home appliances, and the like. The present invention also relates to a method for producing the steel sheet.

### Background Art

In recent years, the use of a high-strength steel sheet in automotive frame components and sheet components has been advanced with the ever increasing need to reduce the weight of automobile bodies. However, in cases where a high-strength steel sheet having a tensile strength (TS) of a 980 to 1180 MPa class is used in an automotive component, cracks tend to occur during press-forming due to reduced ductility or reduced stretch flangeability. Accordingly, it is desired that such high-strength steel sheets have higher formability than those in the related art.

In such circumstances, in technologies for improving the ductility of steel sheets, TRIP steels including retained γ dispersed in the microstructure of the steel sheet have been developed.

For example, Patent Literature 1 discloses that a steel sheet having a TS of 80 kgf/mm² or greater and a high ductility represented by TS × El ≥ 2500 kgf/mm²·% can be obtained by annealing a steel that contains C: 0.10 to 0.45%, S: 0.5 to 1.8%, and Mn: 0.5 to 3.0% and subsequently holding the steel at 350 to 500°C for 1 to 30 min., thereby forming retained γ.

Patent Literature 2 discloses that a steel sheet having excellent ductility (El) and stretch flangeability (λ) can be obtained by annealing a steel that contains C: 0.10 to 0.25%, Si: 1.0 to 2.0%, and Mn: 1.5 to 3.0%, subsequently cooling the steel at 10°C/s or greater to 450 to 300°C, and then holding the steel for 180 to 600 seconds, thereby carrying out control to achieve 5% or greater retained austenite, 60% or greater bainitic ferrite, and 20% or less polygonal ferrite, in terms of volume fraction.

Patent Literature 3 discloses that high ductility and high stretch flangeability can be imparted to a steel sheet by annealing a steel sheet having a specific chemical composition, subsequently cooling the steel sheet to a temperature range of 150 to 350°C, and subsequently reheating and holding the steel sheet at approximately 400°C, thereby obtaining a structure including ferrite, tempered martensite, and retained austenite. This is achieved by utilizing the principle called "Quenching and Partitioning (Q&P)" (quenching and partitioning of carbon from martensite to austenite), in which, in a cooling process, a steel sheet is once cooled to a temperature range between the martensitic transformation start temperature (Ms temperature) and the martensitic transformation finish temperature (Mf temperature) and is subsequently reheated and held to stabilize the retained γ. In recent years, by utilizing the principle, the development of high-strength steel having high ductility and high stretch flangeability has been advanced.

Patent Literature 4 discloses a technique that is an improvement of the Q&P process mentioned above. Specifically, a steel having a specific chemical composition is annealed at a temperature of Ae3-10°C or higher so that polygonal ferrite can be present in an amount of 5% or less, and subsequently, cooling is stopped at a relatively high temperature of Ms-10°C to Ms-100°C so that upper bainite can be formed when the steel is reheated at approximately 400°C; accordingly, high ductility and high stretch flangeability are achieved.

Furthermore, Patent Literature 5 discloses a technique for obtaining a steel sheet having excellent ductility and low-temperature toughness by utilizing bainite that forms at low temperature and bainite that forms at high temperature. Specifically, a steel that contains C: 0.10 to 0.5% is annealed, subsequently cooled at a cooling rate of 10°C/s or greater to 150 to 400°C, and held for 10 to 200 seconds in the temperature range to form low-temperature-range bainite, and the steel is reheated to a temperature range of higher than 400°C and 540°C or less and held for 50 seconds or more to form high-temperature-range bainite; accordingly, a steel sheet having excellent ductility and low-temperature toughness is obtained.

Such TRIP steels contain large amounts of C and Si added thereto to improve ductility and, therefore, pose a problem in that cracking tends to occur in a weld. The cracking is a problem in which, in a case where steel sheets having a Zn coating are spot-welded together or a steel sheet having a Zn coating and a non-coated cold-rolled steel sheet are spot-welded together, Zn diffuses into the grain boundaries of the base steel and causes cracks in the vicinity of a weld nugget.

As a countermeasure for such cracking, Patent Literature 6, for example, proposes a composition of steel sheets that constitute a sheet combination should be a composition having specific ranges, which specifically contains, in mass%, C: 0.003 to 0.01%, Mn: 0.05 to 0.5%, P: 0.02% or less, sol. Al: 0.1% or less, Ti: 48 × (N/14) to 48 × {(N/14) + (S/32)l%, Nb: 93 × (C/12) to 0.1%, B: 0.0005 to 0.003%, N: 0.01% or less, and Ni: 0.05% or less, with the balance being Fe and incidental impurities.

### Citation List

### Patent Literature

PTL 1: Japanese Examined Patent Application Publication No. 6-35619
PTL 2: Japanese Patent No. 4411221
PTL 3: Japanese Patent No. 5463685
PTL 4: Japanese Patent No. 3881559
PTL 5: Japanese Patent No. 3854506
PTL 6: Japanese Unexamined Patent Application Publication No. 10-195597

### Summary of Invention

### Technical Problem

Unfortunately, while the related-art TRIP steel described in Patent Literature 1 had excellent El, the TRIP steel presented a problem in that the stretch flangeability thereof was very low.

In the technology described in Patent Literature 2, bainitic ferrite is mainly utilized as a microstructure, with an amount of ferrite being reduced to a low level, and, therefore, excellent stretch flangeability is achieved, but ductility is not necessarily high. Accordingly, a further improvement in ductility was desired in view of adaptation to components that are difficult to form.

In the technology described in Patent Literature 3, a relatively high ductility and stretch flangeability were realized compared with TRIP steels of the related art and steel of the related art in which bainitic ferrite was utilized. However, fracture was observed in the forming of components that are difficult to form, such as a center pillar, and, therefore, a further improvement in ductility was needed. It was discovered that in a steel sheet in which the technology of Patent Literature 3 was used, a uniform deformation amount, which represents a resistance to fracture, was not necessarily sufficient. The uniform deformation amount is represented by U. El, which is among El's that serve as an indicator of ductility and represents an amount of elongation that occurs before necking begins to occur. There is a need to further increase U. El.

In the technology described in Patent Literature 4, an amount of formation of polygonal ferrite is reduced to reduce blocky martensite, and, therefore, sufficient ductility cannot be ensured. Furthermore, since the cooling stop temperature is set to be relatively high to improve El, large amounts of untransformed γ remain at the time when cooling is stopped, and, consequently, blocky martensite tends to remain.

In the technology described in Patent Literature 5, low-temperature-range-transformed bainite and high-temperature-range-transformed bainite are utilized to improve ductility; however, the contribution of bainite resulting from low-temperature transformation to improvement in ductility is small, and in a case where bainite that forms at high temperature is utilized, blocky constituents tend to remain. Consequently, it is difficult to impart high ductility and high stretch flangeability simultaneously.

As described above, with the related art, steel sheets in which a sufficiently high ductility and a high stretch flangeability are ensured were not obtained. Furthermore, in the steel sheets described in Patent Literature 1 to 5, contents of C and Si are high, and, therefore, the problem of cracking in a weld was not solved.

In the technology described in Patent Literature 6, severe limitations were imposed on elements such as C and Mn, and, therefore, it was impossible to achieve high strength in combination with high ductility at the same time. Thus, there were not steel sheets that had excellent formability in combination with excellent weldability.

The present invention has been made to solve the problems described above. Accordingly, the present invention is directed toward providing a steel sheet that has a tensile strength of 590 MPa or greater and in which high ductility, excellent stretch flangeability, and excellent resistance to weld cracking are realized, and the present invention is also directed toward providing a method for producing the steel sheet.

Note that as referred to herein, a "steel sheet" includes galvanized steel sheets having a galvanized coating applied to a surface thereof.

### Solution to Problem

The present inventors diligently performed studies regarding means for providing high ductility, excellent stretch flangeability, and excellent resistance to weld cracking and reached the following conclusions.

First, studies were conducted regarding reasons for (1) insufficient stretch flangeability of a TRIP steel that had been subjected to an austempering process and (2) insufficient ductility of a steel resulting from the use of Q&P, in association with the related art. A reason for (1) is believed to be as follows. In TRIP steels subjected to austempering, carbon diffuses from bainite to untransformed austenite at approximately 400°C during the austempering, and, at the time when the carbon content of the austenite *becomes close to that of the T₀ composition, in which the free energy of the bcc phase is equal to that of the fcc phase, the bainitic transformation stagnates. Because of the stagnation of the transformation, blocky constituents formed of retained γ or hard martensite in which carbon is concentrated to a degree close to that of the To composition remain. A reason for (2) is believed to be as follows. In steels resulting from the use of Q&P, blocky constituents can be reduced by sufficiently lowering the cooling stop temperature, but, because of precipitation of carbides and stabilization of carbon in martensite, the supply of carbon to the austenite phase is hindered, and, consequently, stabilization of retained γ cannot be sufficiently achieved.

In a case where a large amount of upper bainite is to be formed in the final tempering process of the Q&P process, the occurrence of the phenomenon (1) is inevitable. That is, with heat treatment methods proposed in the related art, it is difficult to achieve both the utilization of stable retained γ that forms adjacent to the upper bainitic transformation and the reduction of blocky constituents. Consequently, with related arts, it is difficult to depart from certain ranges of ductility and stretch flangeability.

To address this, a heat treatment technology was newly discovered with which the utilization of stable retained γ that forms adjacent to upper bainite and the reduction of blocky constituents can both be achieved and which can provide characteristics that exceed the characteristics ranges associated with the above-mentioned technologies. The gist of the heat treatment technology is as follows.
(i) In a process of cooling after annealing, holding is to be carried out for 13 seconds or more and 200 seconds or less at approximately 450°C (405 to 495°C), which corresponds to the transformation nose of the upper bainite and at which little carbide precipitation is involved, to preferentially form bainite that forms in a high temperature range. With this intermediate holding, retained γ, which contributes to improving ductility, is to be formed.
(ii) Second cooling is to be started before concentration of carbon to a degree corresponding to the To composition, which can cause the formation of blocky constituents, occurs in the untransformed γ region in the remaining portion, and cooling is to be carried out until a low temperature range corresponding to Ms-50°C (at least 375°C or lower for the present chemical composition) is reached. Accordingly, the untransformed γ region is divided by martensitic transformation or lower bainitic transformation to sufficiently reduce blocky constituents.
(iii) Subsequently, reheating and holding are to be carried out at approximately 400°C to change the martensite to tempered martensite, and, through a cooling process, holding is to be carried out to ensure that a total area fraction of regions that have a C concentration of 0.6 to 1.3% and where adjacent regions have a C concentration of 0.07% or less falls within a desired range.
(iv) In an instance of complex forming that involves both stretch forming and stretch flanging in a single component, when a bead tension in pressing is increased, the flow of a steel sheet is inhibited, which increases the probability of cracking in a stretch-formed portion, and when the bead tension is decreased, the flow of the steel sheet increases, which tends to increase cracking in a flanged portion. To avoid cracking in the two portions, it is important to control uniform elongation (U. El), which is an indicator of ductility, and λ, which is an indicator of stretch flangeability, to be within a range represented by (TS × U. El - 7000) × λ ≥ 140000 in instances of 590 to 1180 MPa classes (TS: 590 to 1319 MPa). In a case where a limitation is imposed on a component, and a shape of the component is optimized, a 1320 MPa class, which is a higher-strength class, can be used. In the case where a 1320 MPa class (TS: 1320 MPa or greater) is used, it is also important to perform control such that a range represented by (TS × U. El - 7000) × λ ≥ 100000 is satisfied.
(v) Cracking in a spot weld can be significantly reduced by limiting C and Si contents, controlling Mn, Nb, Ti, and B to be in an amount within a predetermined range, and controlling a grain diameter of a surface layer, particularly, a grain diameter (prior γ grain diameter) that form when annealing has been performed.

As described, by performing the two-step cooling process in which the upper bainitic transformation is utilized before the martensitic transformation occurs, and an amount of blocky constituents that remain in the remaining portion is controlled by a Q&P process, the total area fraction of regions that have a C concentration of 0.6 to 1.3% and where adjacent regions have a C concentration of 0.07% or less can be made to fall within a desired range. As a result, even with steel in which amounts of C and Si are limited to a low level, a steel sheet having high ductility in combination with excellent stretch flangeability can be obtained, and, accordingly, improvement in the weld cracking resistance of the steel sheet can be achieved.

The present invention was made based on the findings described above and provides the following items, specifically.
[1] A steel sheet, the steel sheet having a chemical composition that contains, in mass%, C: 0.04 to 0.22%, Si: 0.4% or greater and less than 1.20%, Mn: 2.3 to 3.5%, P: 0.02% or less, S: 0.01% or less, sol. Al: less than 1.0%, and N: less than 0.015%, with the balance being Fe and incidental impurities, the steel sheet having a microstructure in which ferrite is present in an amount of 6 to 90% in terms of an area fraction, a constituent formed of one or more of upper bainite, fresh martensite, tempered martensite, lower bainite, and retained γ is present in an amount of 10 to 94% in terms of an area fraction, and retained γ is present in an amount of 3 to 15% in terms of a volume fraction; a total area fraction, denoted as S_{C-enriched}, of regions that have a C concentration of 0.6 to 1.3% and where an adjacent region is formed of upper bainite having a minor axis width of 0.7 to 10 µm, an aspect ratio of greater than 2.0, and a C concentration of 0.07% or less is 0.1 to 5%; a total area fraction, denoted as S_{γBiock}, of fresh martensite having an equivalent circular grain diameter of 1.5 to 15 µm and an aspect ratio of 3 or less and/or retained γ grains having an equivalent circular grain diameter of 1.5 to 15 µm and an aspect ratio of 3 or less is 5% or less (and 0% or greater); and prior γ in a surface layer has a grain diameter of 2 to 12 µm.
[2] The steel sheet according to [1], wherein the chemical composition further contains, in mass%, one or more selected from Nb: 0.002 to 0.1%, Ti: 0.002 to 0.1%, and B: 0.0002 to 0.01%.
[3] The steel sheet according to [1] or [2], wherein the chemical composition further contains, in mass%, one or more selected from Cu: 0.005 to 1%, Ni: 0.01 to 1%, Cr: 0.01 to 1.0%, Mo: 0.01 to 0.5%, V: 0.003 to 0.5%, Zr: 0.005 to 0.2%, and W: 0.005 to 0.2%.
[4] The steel sheet according to any one of [1] to [3], wherein the chemical composition further contains, in mass%, one or more selected from Ca: 0.0002 to 0.0040%, Ce: 0.0002 to 0.0040%, La: 0.0002 to 0.0040%, Mg: 0.0002 to 0.0030%, Sb: 0.002 to 0.1%, and Sn: 0.002 to 0.1%.
[5] The steel sheet according to any one of [1] to [4], wherein the steel sheet has a tensile strength of 590 MPa or greater and 1600 MPa or less.
[6] The steel sheet according to any one of [1] to [5], further including a galvanized layer on a surface of the steel sheet.
[7] A method for producing a steel sheet,
   the method including:
   in a step of hot rolling, a steel slab having the chemical composition according to any one of [1] to [4] is rolled at an accumulated rolling reduction ratio of 40% or greater within a temperature range of 950 to 1100°C; after finish rolling, a resulting steel sheet is cooled to 520°C or lower at an average cooling rate of 5°C/s or greater and coiled at a coiling temperature of 350 to 520°C; subsequently, the resulting steel sheet is cold-rolled at a cold rolling reduction ratio of 40 to 85%; subsequently, the cold-rolled steel sheet is annealed at an annealing temperature of 780 to 880°C; thereafter, the resulting steel sheet is cooled through a temperature range of 750 to 495°C at an average cooling rate of 7.0 to 2000°C/s and subsequently held for 13 to 200 seconds through a temperature range of 495 to 405°C; further, the resulting steel sheet is cooled through a temperature range of 405°C to a cooling stop temperature Tsq, which is given by formula (A), at an average cooling rate of 5.0 to 80°C/s; further, the resulting steel sheet is heated through a temperature range of the cooling stop temperature to 350°C at an average heating rate of 2°C/s or greater and held for 20 to 3000 seconds through a temperature range of 350 to 590°C; and subsequently, the resulting steel sheet is cooled to room temperature,
   the cooling stop temperature Tsq (°C) being expressed as Ms-50 ≥ Tsq ≥ Ms-180 ...(A),
   a martensitic transformation start temperature being expressed as Ms = 539 - 474 × [%C]/(100 - V_{F}) × 100 - 30.4 × [%Mn] × 1.2 - 12.1 × [%Cr] - 7.5 × [%Mo] - 17.7 × [%Ni] ...(B)
   where [%C], [%Mn], [%Cr], [%Mo], and [%Ni] represent contents (mass%) of C, Mn, Cr, Mo, and Ni, respectively, and in a case where any of C, Mn, Cr, Mo, and Ni is absent, the content thereof is 0; and V_{F} represents an area fraction (%) of ferrite.

### Advantageous Effects of Invention

The present invention provides a steel sheet having high ductility, excellent stretch flangeability, and excellent resistance to weld cracking (excellent weld cracking resistance characteristics). In addition, the present invention enables an increase in strength.

### Brief Description of Drawings

[Fig. 1] Fig. 1 shows an example of SEM images.
[Fig. 2] Fig. 2 presents diagrams illustrating an aspect ratio, a grain width, and a grain length.
[Fig. 3] Fig. 3 is a diagram illustrating an example of the production conditions of the present invention.
[Fig. 4] Fig. 4 is a diagram illustrating an example of graphs that represent a relationship between a C concentration and an analysis length.

### Description of Embodiments

The present invention will be described in detail below. Note that the present invention is not limited to the embodiments described below.

A steel sheet of the present invention has a specific chemical composition and a specific microstructure. Accordingly, regarding the steel sheet of the present invention, the chemical composition and the microstructure will be described in this order.

The steel sheet of the present invention contains the following components. In the following description, the unit "%" used to indicate contents of the components means "mass%".

### C: 0.04 to 0.22%

C is included to ensure an area fraction of tempered martensite, thereby ensuring a predetermined strength; to ensure a volume fraction of retained γ, thereby improving ductility; and to enable a total area fraction of regions that have a C concentration of 0.6 to 1.3% and where adjacent regions have a C concentration of 0.07% or less to fall within a desired range. If a C content is less than 0.04%, the strength of the steel sheet and the ductility of the steel sheet cannot be ensured sufficiently, and, accordingly, the lower limit thereof is specified to be 0.04% or greater. Preferably, the lower limit is 0.06% or greater, and more preferably, 0.11% or greater. If the content is greater than 0.22%, weld cracking resistance is degraded. Accordingly, the upper limit of the C content is specified to be 0.22% or less. It is desirable that the C content be less than or equal to 0.21%, from the standpoint of improving ductility and spot weld cracking resistance. It is further desirable that the C content be less than or equal to 0.20%, from the standpoint of further improving spot weld cracking resistance characteristics.

### Si: 0.4% or greater and less than 1.20%

Si is included to strengthen ferrite, thereby increasing strength, and to inhibit the formation of carbides in martensite and bainite, thereby improving the stability of retained γ to improve ductility. A Si content is specified to be greater than or equal to 0.4% so as to inhibit the formation of carbides to improve ductility. It is preferable that the Si content be greater than or equal to 0.5%, from the standpoint of improving ductility. More preferably, the Si content is greater than or equal to 0.6%. If the Si content is greater than or equal to 1.20%, the spot weld cracking resistance characteristics are significantly degraded. Accordingly, the Si content is specified to be less than 1.20%. It is preferable that the Si content be less than 1.0%, from the standpoint of ensuring a chemical conversion property, ensuring toughness of the base metal and a weld, and inhibiting cracking from occurring in a spot weld. It is preferable that the Si content be less than or equal to 0.8% or less than or equal to 0.7%, from the standpoint of inhibiting cracking from occurring in a spot weld.

### Mn: 2.3 to 3.5%

Mn is an important element in terms of ensuring a predetermined area fraction of tempered martensite and/or bainite to ensure a strength; stabilizing retained γ to improve ductility, which is achieved when Mn is concentrated in γ during α+γ two-phase region annealing, and the Ms temperature of retained γ is accordingly lowered; similarly to Si, inhibiting the formation of carbides in bainite to improve ductility; increasing the volume fraction of retained γ to improve ductility; and improving spot weld cracking resistance characteristics. To produce these effects, a Mn content is specified to be greater than or equal to 2.3%. It is preferable that the Mn content be greater than or equal to 2.4%, from the standpoints of stabilizing retained γ to improve ductility and improving spot weld cracking resistance characteristics. In addition, it is more preferable that the Mn content be greater than or equal to 2.5%. Even more preferably, the Mn content is greater than or equal to 2.6%. If the Mn content is greater than 3.5%, the bainitic transformation is significantly delayed, and as a result, it becomes difficult to ensure high ductility. Furthermore, if the Mn content is greater than 3.5%, it becomes difficult to inhibit the formation of blocky coarse γ and blocky coarse martensite, and thus, stretch flangeability is degraded. Accordingly, the Mn content is specified to be less than or equal to 3.5%. From the standpoint of promoting the bainitic transformation to ensure high ductility, it is preferable to specify the Mn content to be less than or equal to 3.2%. More preferably, the Mn content is less than or equal to 3.1%.

### P: 0.02% or less

P is an element that strengthens steel. However, if a content of P is high, spot weldability is degraded. Accordingly, P is specified to be in an amount less than or equal to 0.02%. From the standpoint of improving spot weldability, it is preferable to specify the amount of P to be less than or equal to 0.01%. Note that the presence of P is not essential; however, from the standpoint of the cost of production, it is preferable that the P content be greater than or equal to 0.001%.

### S: 0.01% or less

S has an effect of improving descalability associated with hot rolling and an effect of inhibiting nitridation during annealing. However, S is an element that has a significant adverse effect on spot weldability, bendability, and hole expandability. To reduce the adverse effect, S is at least specified to be less than or equal to 0.01%. It is preferable that S be in an amount less than or equal to 0.0020%, from the standpoint of improving spot weldability, because, in the present invention, since the contents of C, Si, and Mn are very high, spot weldability is easily degraded. Furthermore, it is more preferable that S be in an amount less than 0.0010%. Note that the presence of S is not essential; however, from the standpoint of the cost of production, it is preferable that the S content be greater than or equal to 0.0001%.

### sol. Al: less than 1.0%

Al is included for deoxidation or as a substitute for Si to stabilize retained γ. The lower limit of an amount of sol. Al is not particularly limited. For stable deoxidation, it is desirable that sol. Al be present in an amount greater than or equal to 0.01%. On the other hand, if sol. Al is present in an amount greater than or equal to 1.0%, the strength of the base metal is extremely degraded, and a chemical conversion property is also adversely affected. Accordingly, the amount of sol. Al is specified to be less than 1.0%. More preferably, the amount of sol. Al is specified to be less than 0.20%, and even more preferably, less than or equal to 0.10%, to achieve high strength.

### N: less than 0.015%

N is an element that forms nitrides, such as BN, AlN, and TiN, in steel and is, therefore, an element that degrades the hot ductility and surface quality of steel. Furthermore, in steel that contains B, N has an adverse effect of eliminating an effect of B through the formation of BN. If a N content is greater than or equal to 0.015%, the surface quality is significantly degraded. Accordingly, the N content is specified to be less than 0.015%. Note that the presence of N is not essential; however, from the standpoint of the cost of production, it is preferable that the N content be greater than or equal to 0.0001%.

The chemical composition of the steel sheet of the present invention may appropriately contain the following optional elements, in addition to the components described above.

### Nb: 0.002 to 0.1%

Addition of Nb is preferable from the standpoint of refining the microstructure to improve spot weld defect resistance characteristics. Furthermore, Nb may be included because Nb has an effect of refining the microstructure so that high strength can be achieved, an effect of promoting the bainitic transformation through grain refining, an effect of improving bendability, and an effect of improving delayed fracture resistance characteristics. A desirable Nb content for producing these effects is greater than or equal to 0.002%. More preferably, the Nb content is greater than or equal to 0.004%, and even more preferably, greater than or equal to 0.010%. However, including a large amount of Nb results in excessive precipitation strengthening, which decreases ductility. Furthermore, a rolling load increases, and castability is degraded. Accordingly, it is desirable that the Nb content be less than or equal to 0.1%. More preferably, the Nb content is less than or equal to 0.05%, and even more preferably, less than or equal to 0.03%.

### Ti: 0.002 to 0.1%

Addition of Ti is preferable from the standpoint of refining the microstructure to improve spot weld defect resistance characteristics. Furthermore, Ti has an effect of immobilizing N in steel by forming TiN to improve hot ductility, and to produce a hardenability improving effect of B. To produce these effects, it is desirable to specify a Ti content to be greater than or equal to 0.002%. It is more preferable that the Ti content be greater than or equal to 0.008%, from the standpoint of sufficiently immobilizing N. More preferably, the Ti content is greater than or equal to 0.010%. On the other hand, if the Ti content is greater than 0.1%, the rolling load increases, and an amount of precipitation strengthening increases, and, consequently, ductility is decreased. Accordingly, it is desirable that the Ti content be less than or equal to 0.1%. More preferably, the Ti content is less than or equal to 0.05%. It is even more preferable that Ti be present in an amount less than or equal to 0.03% so as to ensure high ductility.

### B: 0.0002 to 0.01%

Addition of B is preferable from the standpoint of improving spot weld defect resistance characteristics. Furthermore, B is an element that improves the hardenability of steel and has an advantage of facilitating the formation of a predetermined area fraction of tempered martensite and/or bainite. Furthermore, remaining dissolved B improves delayed fracture resistance characteristics. To produce these effects of B, it is preferable to specify a B content to be greater than or equal to 0.0002%. More preferably, the B content is greater than or equal to 0.0005%. Even more preferably, the B content is greater than or equal to 0.0010%. On the other hand, if the B content is greater than 0.01%, the effects no longer increase, and moreover, hot ductility is significantly decreased, which results in a surface defect. Accordingly, the B content is preferably less than or equal to 0.01%. More preferably, the B content is less than or equal to 0.0050%. Even more preferably, the B content is less than or equal to 0.0030%.

### Cu: 0.005 to 1%

Cu improves corrosion resistance associated with an automobile usage environment. Furthermore, Cu has an effect of inhibiting entry of hydrogen into the steel sheet in an instance in which a corrosion product of Cu covers a surface of the steel sheet. Cu is an element that is unintentionally incorporated when scrap metal is utilized as a raw material. Permitting the unintentional incorporation of Cu enables the utilization of a recycled material source as a raw material source, which results in a reduction in the cost of production. From these standpoints, it is preferable that Cu be included in an amount greater than or equal to 0.005%. Furthermore, from the standpoint of improving delayed fracture resistance characteristics, it is more desirable that Cu be included in an amount greater than or equal to 0.05%. More preferably, the amount is greater than or equal to 0.10%. However, if a Cu content is excessively high, formation of a surface defect occurs, and, accordingly, it is desirable that the Cu content be less than or equal to 1%. More preferably, the Cu content is less than or equal to 0.4%, and even more preferably, less than or equal to 0.2%.

### Ni: 0.01 to 1%

Similarly to Cu, Ni is an element that has a function of improving corrosion resistance. Furthermore, Ni has a function of inhibiting the formation of a surface defect, which tends to occur in an instance in which Cu is included. Accordingly, it is desirable that Ni be included in an amount greater than or equal to 0.01%. More preferably, the amount is greater than or equal to 0.04%, and even more preferably, greater than or equal to 0.06%. However, if a Ni content is excessively high, scales that form in a heating furnace are non-uniform, which, contrarily, can cause the formation of a surface defect. Furthermore, a cost increases. Accordingly, the Ni content is specified to be less than or equal to 1%. More preferably, the Ni content is less than or equal to 0.4%, and even more preferably, less than or equal to 0.2%.

### Cr: 0.01 to 1.0%

Cr may be included because Cr has an effect of improving the hardenability of steel and an effect of inhibiting the formation of carbides in martensite and upper and lower bainite. A desirable Cr content for producing these effects is greater than or equal to 0.01%. More preferably, the Cr content is greater than or equal to 0.03%, and even more preferably, greater than or equal to 0.06%. However, including an excessive amount of Cr degrades pitting corrosion resistance, and, accordingly, the Cu content is specified to be less than or equal to 1.0%. More preferably, the Cr content is less than or equal to 0.8%, and even more preferably, less than or equal to 0.4%.

### Mo: 0.01 to 0.5%

Mo may be included because Mo has an effect of improving the hardenability of steel and an effect of inhibiting the formation of carbides in martensite and upper and lower bainite. A preferable Mo content for producing these effects is greater than or equal to 0.01%. More preferably, the Mo content is greater than or equal to 0.03%, and even more preferably, greater than or equal to 0.06%. However, since Mo significantly degrades a chemical conversion property of a cold-rolled steel sheet, it is preferable to specify a content of Mo to be less than or equal to 0.5%. From the standpoint of improving the chemical conversion property, it is more preferable that Mo be in an amount less than or equal to 0.15%.

### V: 0.003 to 0.5%

V may be included because V has an effect of improving the hardenability of steel, an effect of inhibiting the formation of carbides in martensite and upper and lower bainite, an effect of refining a structure, and an effect of causing precipitation of carbides to improve delayed fracture resistance characteristics. A desirable V content for producing the effects is greater than or equal to 0.003%. More preferably, the V content is greater than or equal to 0.005%, and even more preferably, greater than or equal to 0.010%. However, including a large amount of V significantly degrades castability, and, accordingly, it is desirable that the V content be less than or equal to 0.5%. More preferably, the V content is less than or equal to 0.3%, and even more preferably, less than or equal to 0.1%.

### Zr: 0.005 to 0.2%

Zr may be included because Zr has an effect of improving the hardenability of steel, an effect of inhibiting the formation of carbides in bainite, an effect of refining a structure, and an effect of causing precipitation of carbides to improve delayed fracture resistance characteristics. A desirable Zr content for producing these effects is greater than or equal to 0.005%. More preferably, the Zr content is greater than or equal to 0.008%, and even more preferably, greater than or equal to 0.010%. However, including a large amount of Zr increases coarse precipitates such as ZrN and ZrS, which remain in an undissolved state when a slab is heated before hot rolling, and, consequently, delayed fracture resistance characteristics are degraded. Accordingly, it is desirable that the Zr content be less than or equal to 0.2%. More preferably, the Zr content is less than or equal to 0.15%, and even more preferably, less than or equal to 0.08%.

### W: 0.005 to 0.2%

W may be included because W has an effect of improving the hardenability of steel, an effect of inhibiting the formation of carbides in bainite, an effect of refining a structure, and an effect of causing precipitation of carbides to improve delayed fracture resistance characteristics. A desirable W content for producing these effects is greater than or equal to 0.005%. More preferably, the W content is greater than or equal to 0.008%, and even more preferably, greater than or equal to 0.010%. However, including a large amount of W increases coarse precipitates such as WN and WS, which remain in an undissolved state when a slab is heated before hot rolling, and, consequently, delayed fracture resistance characteristics are degraded. Accordingly, it is desirable that the W content be less than or equal to 0.2%. More preferably, the W content is less than or equal to 0.15%, and even more preferably, less than or equal to 0.08%.

### Ca: 0.0002 to 0.0040%

Ca immobilizes S by forming CaS and, therefore, contributes to improving bendability and delayed fracture resistance characteristics. Accordingly, it is preferable to specify a Ca content to be greater than or equal to 0.0002%. More preferably, the Ca content is greater than or equal to 0.0005%, and even more preferably, greater than or equal to 0.0010%. However, adding a large amount of Ca degrades surface quality and bendability, and, accordingly, it is desirable to specify the Ca content to be less than or equal to 0.0040%. More preferably, the Ca content is less than or equal to 0.0035%, and even more preferably, less than or equal to 0.0020%.

### Ce: 0.0002 to 0.0040%

Similarly to Ca, Ce immobilizes S and, therefore, contributes to improving bendability and delayed fracture resistance characteristics. Accordingly, it is preferable to specify a Ce content to be greater than or equal to 0.0002%. More preferably, the Ce content is greater than or equal to 0.0004%, and even more preferably, greater than or equal to 0.0006%. However, adding a large amount of Ce degrades surface quality and bendability, and, accordingly, it is desirable to specify the Ce content to be less than or equal to 0.0040%. More preferably, the Ce content is less than or equal to 0.0035%, and even more preferably, less than or equal to 0.0020%.

### La: 0.0002 to 0.0040%

Similarly to Ca, La immobilizes S and, therefore, contributes to improving bendability and delayed fracture resistance characteristics. Accordingly, it is preferable to specify a La content to be greater than or equal to 0.0002%. More preferably, the La content is greater than or equal to 0.0004%, and even more preferably, greater than or equal to 0.0006%. However, adding a large amount of La degrades surface quality and bendability, and, accordingly, it is desirable to specify the La content to be less than or equal to 0.0040%. More preferably, the La content is less than or equal to 0.0035%, and even more preferably, less than or equal to 0.0020%.

### Mg: 0.0002 to 0.0030%

Mg immobilizes O by forming MgO and, therefore, contributes to improving delayed fracture resistance characteristics. Accordingly, it is preferable to specify a Mg content to be greater than or equal to 0.0002%. More preferably, the Mg content is greater than or equal to 0.0004%, and even more preferably, greater than or equal to 0.0006%. However, adding a large amount of Mg degrades surface quality and bendability, and, accordingly, it is desirable to specify the Mg content to be less than or equal to 0.0030%. More preferably, the Mg content is less than or equal to 0.0025%, and even more preferably, less than or equal to 0.0010%.

### Sb: 0.002 to 0.1%

Sb inhibits oxidation and nitridation in a surface layer portion of the steel sheet and, therefore, inhibits associated reductions in the contents of C and B in the surface layer. Furthermore, as a result of the inhibition of the reductions in the contents of C and B, formation of ferrite in the surface layer portion of the steel sheet is inhibited, which results in an increase in strength and an improvement in fatigue resistance characteristics. From these standpoints, a desirable Sb content is greater than or equal to 0.002%. More preferably, the Sb content is greater than or equal to 0.004%, and even more preferably, greater than or equal to 0.006%. However, if the Sb content is greater than 0.1%, castability is degraded, and segregation occurs at prior γ grain boundaries, which degrades delayed fracture resistance characteristics. Accordingly, it is desirable that the Sb content be less than or equal to 0.1%. More preferably, the Sb content is less than or equal to 0.04%, and even more preferably, less than or equal to 0.03%.

### Sn: 0.002 to 0.1%

Sn inhibits oxidation and nitridation in a surface layer portion of the steel sheet and, therefore, inhibits associated reductions in the contents of C and B in the surface layer. Furthermore, as a result of the inhibition of the reductions in the contents of C and B, formation of ferrite in the surface layer portion of the steel sheet is inhibited, which results in an increase in strength and an improvement in fatigue resistance characteristics. From these standpoints, a desirable Sn content is greater than or equal to 0.002%. More preferably, the Sn content is greater than or equal to 0.004%, and even more preferably, greater than or equal to 0.006%. However, if the Sn content is greater than 0.1%, castability is degraded. Furthermore, Sn is segregated at prior γ grain boundaries, which degrades delayed fracture resistance. Accordingly, it is desirable that the Sn content be less than or equal to 0.1%. More preferably, the Sn content is less than or equal to 0.04%, and even more preferably, less than or equal to 0.03%.

In a case where any of the above-mentioned optional elements is included in an amount less than the lower limit, the optional element included in an amount less than the lower limit does not impair the effects of the present invention. The steel sheet according to the present embodiment has the chemical composition described above, and the balance, other than the chemical composition described above, includes Fe (iron) and incidental impurities. It is preferable that the balance be Fe and incidental impurities.

The microstructure of the steel sheet of the present invention will now be described.

### Ferrite: 6 to 90%

Ferrite is to be present in an amount greater than or equal to 6% in terms of an area fraction so that high ductility can be ensured. More preferably, the amount is greater than or equal to 8%, and even more preferably, greater than or equal to 11%. On the other hand, the ferrite is to be present in an amount less than or equal to 90% in terms of the area fraction so that a predetermined strength can be achieved. More preferably, the amount is less than or equal to 50%, even more preferably, less than 20%, and still more preferably, less than 15%. As referred to herein, the ferrite is polygonal ferrite.

Constituent Formed of One or More of Upper Bainite, Fresh Martensite, Tempered Martensite, Lower Bainite, and Retained y: 10 to 94%

These are to be present in an amount of 10 to 94% in terms of a total of area fractions so that a predetermined strength, ductility, and stretch flangeability can be ensured. The lower limit is more preferably greater than or equal to 30%, even more preferably greater than 50%, and still more preferably greater than 80%. The upper limit is more preferably less than or equal to 92% and even more preferably less than or equal to 89%. In a case where the area fractions of the upper bainite, the fresh martensite, the tempered martensite, the lower bainite, and the retained γ are determined based on SEM photographs, it is believed that in many cases, the contents of the constituents are within the following ranges. The upper bainite is present in an amount of 1 to 20% in terms of the area fraction. The fresh martensite is present in an amount of 0 to 20% in terms of the area fraction. The tempered martensite is present in an amount of 1 to 80% in terms of the area fraction. The lower bainite is present in an amount of 0 to 50% in terms of the area fraction.

### Retained y: 3 to 15%

Retained γ is to be present in an amount greater than or equal to 3% in terms of a volume fraction in the entire microstructure so that high ductility can be ensured. More preferably, the amount is greater than or equal to 5%, and even more preferably, greater than or equal to 7%. The amount of the retained γ includes both the amount of retained γ that forms adjacent to upper bainite and the amount of retained γ that forms adjacent to martensite or lower bainite. An excessive increase in the amount of the retained γ results in a decrease in strength, a decrease in stretch flangeability, and degradation of delayed fracture resistance characteristics. Accordingly, the volume fraction of the retained γ is specified to be less than or equal to 15%. More preferably, the volume fraction is less than or equal to 13%. The "volume fraction" can be regarded as an "area fraction".

Total Area Fraction of Regions that Have a C Concentration of 0.6 to 1.3% and where Adjacent Regions are Formed of Upper Bainite Having a Minor Axis Width of 0.7 to 10 µm, an Aspect Ratio of greater than 2.0, and a C Concentration of 0.07% or less is 0.1 to 5%

With an adjustment of an area fraction of regions having a C concentration higher than that of a surrounding region, ductility can be improved. Specifically, a total area fraction, denoted as S_{C-enriched}, of regions that have a C concentration of 0.6 to 1.3% and where adjacent regions have a C concentration of 0.07% or less is specified to be 0.1 to 5%, and as a result, ductility is enhanced. The regions that have a C concentration of 0.6 to 1.3% and where adjacent regions have a C concentration of 0.07% or less are formed of retained γ and have a plate-like (rod-like in the SEM photographs) form. The retained γ is herein referred to as "plate-like γ". Achieving a high C concentration in the plate-like γ requires that at least one of the adjacent regions be formed of upper bainite having a minor axis width of 0.7 to 10 µm, an aspect ratio of greater than 2.0, and a C concentration of 0.07% or less. If the adjacent region is formed of ferrite, a sufficient supply of carbon to the plate-like γ does not occur. This is because during annealing, since a carbon concentration in ferrite is low, the ferrite is unlikely to serve as a carbon source. On the other hand, in the instance where the adjacent region is formed of bainite, the supply of carbon is sufficient. This is because a carbon concentration before the bainitic transformation occurs is high compared with that of ferrite, and, therefore, a function as a carbon source is exhibited. Furthermore, forming bainite at a high temperature of approximately 450°C enables the bainite to have reduced strain therein, and as a result, carbon is transferred to γ without being trapped in the strain. Furthermore, in the steel of the present invention, in which an amount of added Si is low, carbides easily form even at approximately 400°C, and, therefore, the bainitic transformation at a high temperature of approximately 450°C is essential. Thus, by carrying out holding at high temperature for a predetermined length of time, bainite having a low carbon concentration can be formed, and, adjacent to the bainite, a region having a high carbon concentration (plate-like γ) can be formed. Note that the "adjacent region" refers to a region adjacent to the region that has a C concentration of 0.6 to 1.3% and where adjacent regions have a C concentration of 0.07% or less.

A Total Area Fraction, Denoted as S_{γBiock}, of Fresh Martensite Having an Equivalent Circular Grain Diameter of 1.5 to 15 µm and an Aspect Ratio of 3 or less and/or Retained γ Grains Having an Equivalent Circular Grain Diameter of 1.5 to 15 µm and an Aspect Ratio of 3 or less is 5% or less

In the related art, in a case where a large amount of bainitic transformation is to be caused in a final tempering step, a large amount of blocky martensite or blocky retained γ remains. To prevent this, in the related art, bainitic transformation was promoted by reducing Mn to 2% or less, or bainitic transformation was promoted by performing quenching from a γ single phase. However, in the case where the Mn content was reduced, a retained γ-stabilizing effect and a retained γ-volume-fraction-increasing effect were lost, and in the case where quenching was performed from a γ single phase to cause bainitic transformation across the entire area of the structure, ductility was impaired because ferrite was not formed. In contrast, in the present invention, even in a case where a steel sheet containing a large amount of Mn is subjected to two-phase region annealing, utilization of the bainitic transformation and a reduction of blocky constituents can both be achieved. The blocky constituents that have an adverse effect on stretch flangeability are fresh martensite having an equivalent circular grain diameter of 1.5 to 15 µtm and an aspect ratio of 3 or less and/or retained γ grains having an equivalent circular grain diameter of 1.5 to 15 µtm and an aspect ratio of 3 or less. By reducing a total area fraction thereof, denoted as S_{γBiock}, to 5% or less, excellent stretch flangeability forming can be ensured. To ensure excellent stretch flangeability forming, it is further preferable that S_{γBiock} be less than 4%. S_{γBiock} may be 0%. Note that only one of fresh martensite having an equivalent circular grain diameter of 1.5 to 15 µm and an aspect ratio of 3 or less and retained γ grains having an equivalent circular grain diameter of 1.5 to 15 µm and an aspect ratio of 3 or less is present, the area fraction of the one that is present is the total area fraction.

### Grain Diameter of Prior γ in Surface Layer: 2 to 12 µm

In the microstructure of the steel sheet of the present application, prior γ in a surface layer of the steel sheet has a grain diameter of 2 to 12 µm. When the prior γ in the surface layer has a grain diameter of 2 to 12 µm, an effect of inhibiting spot weld cracking can be produced. From the standpoint of maintaining a high strength corresponding to a tensile strength (TS) of 780 MPa or greater and inhibiting spot weld cracking, it is preferable that the grain diameter of the prior γ in the surface layer be greater than or equal to 3 µπι; more preferably, the grain diameter is greater than or equal to 4 µm. Furthermore, from a similar standpoint, it is preferable that the grain diameter of the prior γ in the surface layer be less than or equal to 9 µm; more preferably, the grain diameter is less than or equal to 7 µm.

Methods for measuring the microstructure will now be described.

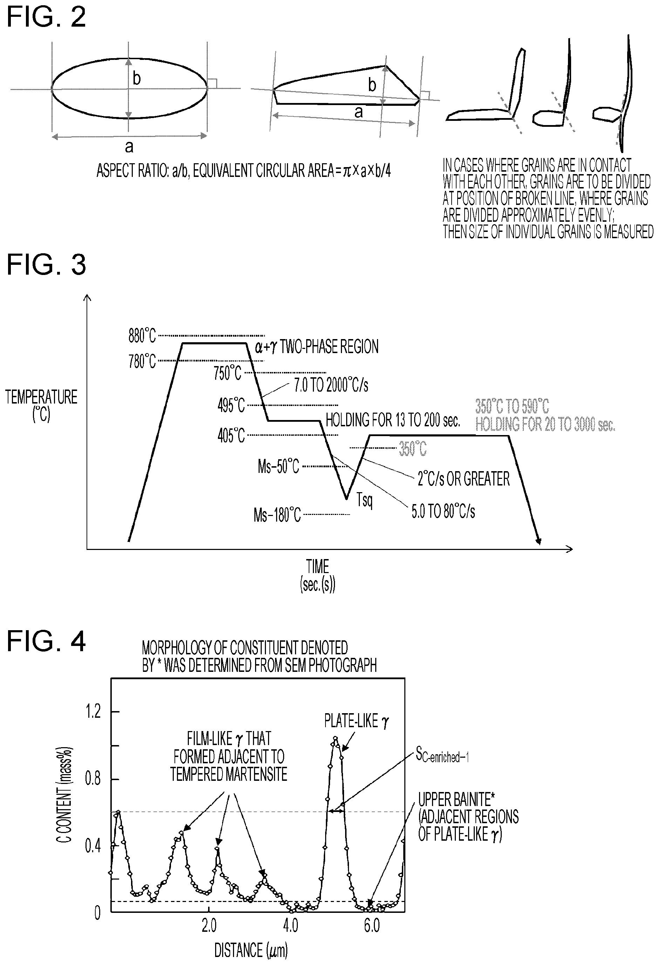

The area fraction of the ferrite was measured in the following manner: a piece was cut from a cross section along a sheet thickness direction and parallel to a rolling direction and was mirror-polished. Subsequently, the piece was etched with 3% nital, and an examination at a 1/4 thickness position was carried out with an SEM, through 10 fields of view at a magnification of 5000×. The ferrite of interest was polygonal ferrite, which included few carbides therein and was relatively equiaxed. The polygonal ferrite is the region that looks darkest in an SEM. In a case where it was difficult to distinguish whether the constituent was upper bainite or ferrite, regions having a polygonal form of ferrite, which had an aspect ratio of less than or equal to 2.0, were classified as ferrite, and regions having an aspect ratio of greater than 2.0 were classified as upper bainite (bainitic ferrite), and, accordingly, the area fraction was calculated. As illustrated in Fig. 2, the aspect ratio was determined as follows: a major axis length a, which was the longest length of a grain, was determined, a longest length of the grain across the grain in a direction perpendicular to the major axis, which has a length a, was designated as a minor axis length b, and a/b was designated as the aspect ratio. Furthermore, in cases where grains are in contact with each other, the grains are divided at the region where the individual grains are in contact with each other, at the position of the broken line illustrated in Fig. 2, in a manner such that the grains are divided approximately evenly; accordingly, a size of the individual grains is measured.

The area fraction of the constituent formed of one or more of upper bainite, fresh martensite, tempered martensite, lower bainite, and retained γ was measured by using a procedure similar to that used for the ferrite. This area fraction is the area fraction of the regions other than the ferrite. Note that the area fraction of carbides was very small and therefore included in the above-mentioned area fraction.

The volume fraction of the retained γ was determined as follows: a thickness 1/4 position with respect to the surface layer was chemically polished, and X-ray diffraction was used. The incident X ray used was a Co-Kα radiation source, and, from the ratios between the intensities of the (200), (211), and (220) planes of the ferrite and the intensities of the (200), (220), and (311) planes of the austenite, the area fraction of the retained austenite was calculated. Note that since the retained γ is randomly distributed, the volume fraction of retained γ determined using X-ray diffraction is equal to the area fraction of the retained γ in the microstructure.

Sizes (minor axis width and aspect ratio) of the upper bainite adjacent to the plate-like γ having a C concentration of 0.6 to 1.3% and sizes (equivalent circular grain diameter and aspect ratio) and the area fraction of the fresh martensite having an equivalent circular grain diameter of 1.5 to 15 µm. and an aspect ratio of 3 or less and/or retained γ grains having an equivalent circular grain diameter of 1.5 to 15 µm and an aspect ratio of 3 or less were measured by using SEM photographs as in the measurement of the ferrite (since fresh martensite and retained γ grains could not be distinguished from each other in SEM photographs, they were handled without discrimination). Specifically, the aspect ratio was determined as described above. That is, as illustrated in Fig. 2, a major axis length a, which was the longest length of a grain, was determined, a longest length of the grain across the grain in a direction perpendicular to the major axis, which has a length a, was designated as a minor axis length b, and a/b was designated as the aspect ratio. Equivalent circular grain dimensions (the equivalent circular grain diameters) were determined as follows: by using an SEM, the area fraction of each of them was determined, and an equivalent circular dimension thereof was calculated and designated as the equivalent circular grain diameter of the individual grains. Sizes of the upper bainite adjacent to the plate-like γ having a C concentration of 0.6 to 1.3% was measured in the same region as the region where a measurement of the C concentration using an FE-EPMA was performed, which will be described later.

Furthermore, the grain diameter of the prior γ in the surface layer was measured in accordance with the specification of JIS G 0551. As referred to herein, the "surface layer" is a region within 50 µm of a surface of the steel sheet as viewed in a cross section along a sheet thickness direction and parallel to the rolling direction of the steel sheet. The grain diameter of the prior γ in the surface layer was measured by using an intercept method, in which lines extending 50 µm inwardly from the surface of the steel sheet in a sheet thickness depth direction were used. The plurality of lines was provided at intervals of 50 µm such that the total number of intercepted grains was within a range of 60 to 100, and, accordingly, the measurement was performed. An instance in which the number of grains per line was less than 10 could occur, but such numerical values were also employed herein. Since the annealing was performed in a γ+α combined two-phase region, the grain boundaries during the annealing included γ/γ grain boundaries and γ/α grain boundaries and, in addition, α/α grain boundaries, which were present in some portions. All of these grain boundaries were covered herein, and the grain diameters associated with the grain boundaries including these were designated as the grain diameters of the prior γ.

The C concentration (mass%) of the regions that have a C concentration of 0.6 to 1.3% and where adjacent regions have a C concentration of 0.07% or less and the C concentration (mass%) of the adjacent regions were measured in a sheet thickness 1/4 position in a cross section along the sheet thickness direction and parallel to the rolling direction, by using an electrolysis-emission electron probe microanalyzer (FE-EPMA) JXA-8500F, manufactured by JEOL Ltd. By using an acceleration voltage of 6 kV, a probe current of 7 × 10⁻⁸ A, and a minimum beam diameter, line analysis was performed. An analysis length of 8 µm was specified, and, to obtain general information of the microstructure, C profile data of 25 random sites that were located at intervals of 20 µm or more were acquired. To eliminate the influence of contamination, a portion corresponding to background was subtracted so that an average value of C obtained in each of the line analyses would become equal to the carbon content of the base steel. That is, in the case where the average value of the measured carbon contents was greater than the carbon content of the base steel, the excess portion was considered to be due to contamination, and, therefore, the excess portion was subtracted from the analytical value of each of the positions uniformly, and the result was designated as a true C content of each of the positions. The total area fraction S_{C-enriched} of regions in which the C content was 0.6 to 1.3% and which had a region, adjacent thereto, in which the C concentration was 0.07% or less was determined as the proportion of the regions in which the C content was 0.6 to 1.3% as determined by the result of the line analysis. This determination was based on the assumption that, regarding the regions in which the C content was 0.07% or less at the base portions of the C peak, the regions were in a randomly distributed state. Note that an example of graphs that represent a relationship between the C concentration determined by the measurement and the analysis length is shown in Fig. 4. In Fig. 4, a region that has a C concentration of 0.6 to 1.3% and where adjacent regions have a C concentration of 0.07% or less is indicated by S_{C}-_{enriched-1}. The same graphs as that shown in Fig. 4 are derived for the 25 sites, and, accordingly, the total area fraction S_{C-enriched}, which is the total of S_{C-enriched-1}'s, is obtained. Note that the "adjacent region" is a region corresponding to a base of a high-C region. As referred to herein, the morphology of the constituent denoted by the symbol "*" in Fig. 4 is determined by using an SEM photograph.

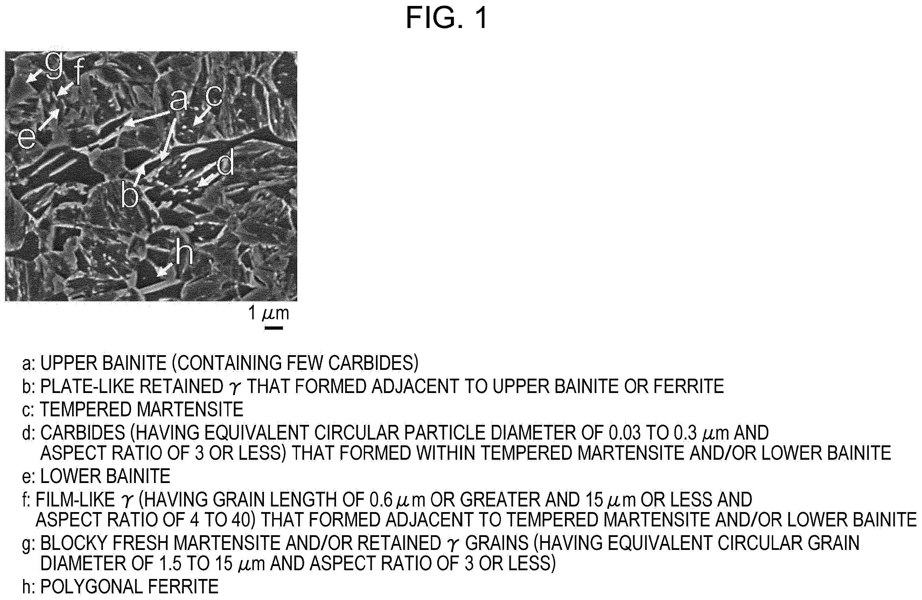

The upper bainite, the fresh martensite, the tempered martensite, the lower bainite, and the retained γ are separately evaluated by using an SEM photograph. An example is shown in Fig. 1. The upper bainite (a) is a constituent that has a minor axis width of 0.4 µm or greater and an aspect ratio of greater than 2.0 and which contains few carbides. The expression "contains few carbides (d)" means that an average distribution density of carbides within a constituent is less than 1.0/µm². The carbides (d) will be described below. The plate-like retained γ (b) is present adjacent to the upper bainite or/and the ferrite. The tempered martensite (c) is a region that contains, within the structure, fine carbides (d) having an aspect ratio of 3 or less and an equivalent circular particle diameter of 0.03 to 0.3 µm, with 2 to 20 carbide particles being present per 1 µm². The lower bainite (e) is a region that contains, within the structure, film-like retained γ (f) having a grain length of 0.6 µm or greater and 15 µm or less and an aspect ratio of 4 to 40 or fine carbides (d) having an aspect ratio of 3 or less and an equivalent circular particle diameter of 0.03 to 0.3 µm, with 0 to 1.9 carbide particles being present per 1 µm². The film-like retained γ partially contains carbides and fresh martensite. In a region in which the bainitic transformation or martensite transformation has not sufficiently progressed, blocky fresh martensite having an equivalent circular grain diameter of 1.5 to 15 µm and an aspect ratio of 3 or less or blocky retained γ grains (g) having an equivalent circular grain diameter of 1.5 to 15 µm and an aspect ratio of 3 or less remain. The untransformed region is polygonal ferrite (h).

It is preferable that the steel sheet of the present invention have a tensile strength of 590 MPa or greater. More preferably, the steel sheet has a tensile strength of 780 MPa or greater, even more preferably 980 MPa or greater, and still more preferably 1180 MPa or greater. It is preferable that the upper limit of the tensile strength be 1600 MPa or less, from the standpoint of ensuring that other properties are also achieved; more preferably, the upper limit is 1450 MPa or less.

Furthermore, from the standpoint of improving formability in complex forming, it is preferable that (TS × U. El - 7000) × λ ≥ 140000 in instances in which TS is 590 to 1319 MPa. More preferably, (TS × U. El - 7000) × λ ≥ 160000, and even more preferably, (TS × U. El - 7000) × λ ≥ 180000. Although the upper limit is not particularly limited, it is preferable that (TS × U. El - 7000) × λ ≤ 400000, from the standpoint of ensuring that spot weld cracking resistance is also achieved; more preferably, (TS × U. El - 7000) × λ < 290000. In instances in which TS is 1320 MPa or greater, it is preferable that (TS × U. El - 7000) × λ ≥ 100000, and it is more preferable that (TS × U. El - 7000) × λ ≥ 120000.

A method for producing the steel sheet of the present invention will now be described.

### Hot Rolling

Examples of methods for hot-rolling a steel slab include a method in which a slab is heated and thereafter rolled, a method in which a slab is directly rolled after being continuously cast, without being heated, and a method in which a slab is subjected to a heat treatment for a short time after being continuously cast and is thereafter rolled. In a hot rolling step, a slab heating temperature may be 1100 to 1300°C; it is preferable, from the standpoint of obtaining a fine-grained structure, that the heating be carried out at 1100 to 1240°C, with a soaking temperature being 20 to 300 min. In a subsequent step in which rough rolling and finish rolling are performed, a slab is rolled within a temperature range of 950 to 1100°C at an accumulated rolling reduction ratio of 40% or greater, and after finish rolling, a resulting steel sheet is cooled to 520°C or lower at an average cooling rate of 5°C/s or greater and is then coiled at a coiling temperature of 350 to 520°C. Within the temperature range of 950 to 1100°C, recrystallization easily progresses after rolling, and, consequently, the structure resulting from the hot rolling is fine-grained, and the prior γ grains resulting from cold rolling and annealing are fine-grained. Producing this effect requires that the accumulated rolling reduction be 40% or greater. The rolling reduction ratio in a temperature range lower than 950°C is not particularly limited, but rolling reduction in this temperature range is unlikely to result in a grain size refinement and has an effect of increasing anisotropy. Accordingly, the rolling reduction ratio is preferably 0 to 60% and more preferably 15 to 50%, in terms of an accumulated rolling reduction ratio. A finish rolling temperature is not particularly limited and is preferably 800 to 970°C. From the standpoint of reducing anisotropy to improve λ, it is more preferable that the finish rolling temperature be 920 to 970°C. A reason for specifying the coiling temperature of 350 to 520°C is to inhibit pearlite from forming in an amount greater than 20% in terms of an area fraction in the coiled hot-rolled steel sheet. Formation of pearlite results in a final product that is coarse-grained and which, therefore, has degraded weld cracking resistance characteristics. In steel in which Si is reduced to less than 1.20%, pearlite easily forms, and, therefore, it is more preferable to employ a coiling temperature of 400 to 500°C, thereby reducing the area fraction of pearlite that forms in the hot-rolled steel sheet to less than 10%. To inhibit coil collapse from occurring after the coiling and variations in the sheet thickness from occurring after the cold rolling, the steel sheet may be held at 550 to 720°C on a run-out table for 5 to 20 seconds after the finish rolling, to form ferrite and/or upper bainite in an amount of 1 to 25%.

A ratio between the constituents of the hot-rolled steel sheet is as follows: ferrite and/or upper bainite are in an amount of 0 to 25%, pearlite is in an amount of 0 to 20%, and the remaining portion, which is a constituent formed of tempered martensite, fresh martensite and lower bainite, is in an amount of 55 to 100%.

### Cold Rolling

In the cold rolling, a cold rolling reduction ratio of 40 to 85% is employed. This enables a fine-grained structure to be obtained, which improves weld cracking resistance characteristics. From the standpoint of ensuring high strength consistently and reducing anisotropy, it is preferable that the cold rolling reduction ratio be 45 to 80%. Note that in a case where the rolling load is high, a softening annealing process may be performed at 450 to 730°C in a continuous annealing line (CAL) or a box annealing furnace (BAF).

### Annealing

After the hot rolling and cold rolling of a steel slab having a predetermined chemical composition, annealing is performed under the conditions specified below. Note that Fig. 3 illustrates an example of the production conditions. Facilities for the annealing are not particularly limited, and, from the standpoint of ensuring productivity and a desired heating rate and cooling rate, it is preferable that the annealing be performed in a continuous annealing line (CAL) or a continuous hot-dip galvanizing line (CGL).

### Annealing Temperature: 780 to 880°C

An annealing temperature is specified to be 780 to 880°C to ensure the predetermined area fraction of tempered martensite and/or bainite and the predetermined volume fraction of retained γ. To ensure that polygonal ferrite is present in an amount of 6% or greater, the annealing temperature is adjusted in conformity with the components so that α+γ two-phase region annealing can be achieved.

### Average Cooling Rate Over Temperature Range of 750 to 495°C: 7.0 to 2000°C/s

After the annealing, the resulting steel sheet is cooled through a temperature range of 750 to 495°C at an average cooling rate of 7.0 to 2000°C/s. If the average cooling rate is less than 7.0°C/s, ferrite excessively forms or coarse bainitic ferrite forms, which results in an increase in blocky constituents. Accordingly, the average cooling rate is greater than or equal to 7.0°C/s. More preferably, the average cooling rate is greater than or equal to 8.0°C/s. On the other hand, if the average cooling rate is excessively high, a sheet shape is degraded. Accordingly, the average cooling rate is less than or equal to 2000°C/s. Preferably, the average cooling rate is less than or equal to 100°C/s. More preferably, the average cooling rate is less than 30°C/s. In a case where the average cooling rate is less than or equal to 29°C/s, the sheet shape can be at a favorable level (a sheet warpage of 15 mm or less as described later in the Examples section), and, therefore, such an average cooling rate is preferable. Furthermore, in a case where the average cooling rate is less than or equal to 14°C/s, the sheet shape can be at a more favorable level (a sheet warpage of 10 mm or less as described later in the Examples section), and, therefore, such an average cooling rate is more preferable.

### Holding Time Associated with Temperature Range of 495 to 405°C: 13 to 200 seconds

Carrying out holding through this temperature range for a predetermined time makes it possible to ensure that S_{C-enriched} is 0.1 to 5%. To ensure that S_{C-enriched}, which plays a part in improving ductility, is 0.1 to 5%, the holding time associated with the temperature range is specified to be 13 seconds or more. From the standpoint of achieving an S_{C-enriched} of 0.2 to 5% to improve ductility, it is more preferable that the holding time associated with the temperature range be 15 seconds or more. On the other hand, even if the holding is carried out for a holding time of more than 200 seconds, no significant contribution can be made to the adjustment of S_{C-enriched}. If the holding is performed for more than 200 seconds, carbon concentration proceeds in blocky untransformed γ, which results in an increase in the amount of remaining blocky constituents. Accordingly, the holding time associated with the temperature range of 495 to 405°C is specified to be 13 to 200 seconds. From the standpoint of improving stretch flangeability, it is preferable that the holding time associated with the temperature range of 495 to 405°C be less than or equal to 100 seconds. Note that the holding through this temperature range corresponds to reducing the average cooling rate over this temperature range to 6.9°C/s or less.

### Average Cooling Rate over Range of 405°C to Cooling Stop Temperature Tsq: 5.0 to 80°C/s

Furthermore, the resulting steel sheet is cooled through a temperature range of 405°C to a cooling stop temperature Tsq, which is given by formula (A), at an average cooling rate of 5.0 to 80°C/s. If the average cooling rate over this temperature range is low, C is concentrated in untransformed γ, which results in an increase in blocky constituents. Furthermore, as the precipitation of carbides proceeds, C is consumed, which results in a decrease in ductility. From the standpoint of reducing blocky constituents to improve stretch flangeability and inhibiting the precipitation of carbides to improve ductility, it is more preferable that the average cooling rate over the temperature range be greater than or equal to 7.0°C/s. If the cooling rate is greater than 80°C/s, diffusion of C from martensite and lower bainite into γ during cooling is inhibited, and, therefore, the formation thereof is inhibited, which results in a decrease in ductility. Accordingly, the average cooling rate over the temperature range is specified to be 5.0 to 80°C/s. From the standpoint of promoting the diffusion of C from martensite and lower bainite into γ during cooling, it is desirable that the average cooling rate over the temperature range be less than or equal to 15°C/s; more preferably, the average cooling rate is less than 10°C/s. A temperature range of 320 to higher than 300°C has an effect of improving ductility through the formation of lower bainite. Accordingly, it is particularly preferable that the average cooling rate over this temperature range be less than 10°C/s.

The cooling stop temperature Tsq (°C) is expressed as Ms-50 ≥ Tsq ≥ Ms-180 ... (A) .

The martensitic transformation start temperature is expressed as Ms = 539 - 474 × [%C]/(100 - V_{F}) × 100 - 30.4 × [%Mn] × 1.2 - 12.1 × [%Cr] - 7.5 × [%Mo] - 17.7 × [%Ni] ... (B) .

In formula (B), [%C], [%Mn], [%Cr], [%Mo], and [%Ni] represent contents (mass%) of C, Mn, Cr, Mo, and Ni, respectively. In a case where any of C, Mn, Cr, Mo, and Ni is absent, the content thereof is 0. V_{F} represents the area fraction (%) of ferrite.

The cooling stop temperature is to be within the above-described range so that blocky constituents can be inhibited, and an S_{C-enriched} of 0.1 to 5% can be achieved.

Preferably, the following relationships are satisfied: CR1 > CR2, and CR2 < CR3 where CR1 is the average cooling rate over the range of 750 to 495°C, CR2 is the average cooling rate over the range of 495 to 405°C, and CR3 is the average cooling rate over the range of 405°C to the cooling stop temperature (Tsq).

### Average Heating Rate over Temperature Range of Cooling Stop Temperature to 350°C: 2°C/s or greater

Furthermore, by heating the resulting steel sheet through a temperature range of the cooling stop temperature to 350°C in a short time, precipitation of carbides can be inhibited to ensure high ductility. Furthermore, in the case where reheating to 350°C or higher is performed, upper bainite forms, with the martensite or lower bainite that formed as a result of the cooling serving as a nucleus. If the average heating rate over the range up to 350°C is low, these effects are not produced. As a result, the amount of retained γ is reduced, which results in a decrease in ductility. Accordingly, the average heating rate over the temperature range of the cooling stop temperature to 350°C is specified to be 2°C/s or greater. From the standpoints of inhibiting the precipitation of carbides and, when reheating is performed, causing the formation of upper bainite, it is desirable that the average heating rate be greater than or equal to 5°C/s; more preferably, the average heating rate is greater than or equal to 10°C/s. The upper limit of the average heating rate is not particularly limited and preferably 50°C/s or less and more preferably 30°C/s or less.

### Holding Time Associated with Temperature Range of 350 to 590°C: 20 to 3000 seconds

To achieve an S_{C-enriched} of 0.1 to 5% and to improve λ by dividing, through the bainitic transformation, the region in which untransformed γ is distributed in a blocky form, the resulting steel sheet is held for 20 to 3000 seconds through a temperature range of 350 to 590°C.

When the holding time associated with the range of 350°C to 590°C is 20 to 3000 seconds, the total area fraction S_{C-enriched} of regions that have a C concentration of 0.6 to 1.3% and where adjacent regions have a C concentration of 0.07% or less becomes 0.1 to 5%, and as a result, ductility is further improved.

From the standpoint of utilizing the untransformed-γ-fragmentation effect through the bainitic transformation to improve λ, it is desirable that the holding be carried out for 180 seconds or more through the range of 350°C to 590°C.

From the standpoint of promoting carbon partitioning to improve ductility and reducing blocky constituents to improve λ, it is more preferable that the holding temperature be 370 to 500°C.

Note that the holding through the temperature range of 350°C to 590°C may be a process by which a hot-dip galvanizing process is also accomplished. In the case where a hot-dip galvanizing process is performed, it is preferable that the hot-dip galvanizing process be performed by immersing the steel sheet in a galvanizing bath at 440°C or higher and 500°C or lower, and subsequently, the coating weight be adjusted by gas wiping or the like. In the hot-dip galvanizing, it is preferable that a galvanizing bath having an Al content of 0.10% or greater and 0.22% or less be used. Furthermore, after the hot-dip galvanizing process, a treatment for alloying the galvanized coating may be performed. In the case where a treatment for alloying the galvanized coating is performed, it is preferable that the treatment be performed in a temperature range of 470°C or higher and 590°C or lower.

Subsequently, the steel sheet is cooled to room temperature, and then, to stabilize press formability by, for example, adjustment of a surface roughness and leveling of the sheet shape and to increase YS, the steel sheet may be subjected to skin pass rolling. It is preferable that a skin pass elongation be 0.1 to 0.5%. The leveling of the sheet shape may be carried out by using a leveler. Note that in the process of cooling the steel sheet to room temperature, it is preferable that the cooling be performed at an average cooling rate of 0.1°C/s or greater over a temperature range of 350 to 50°C.

To improve stretch flangeability, a low-temperature heat treatment may be performed at 100 to 300°C for 30 seconds to 10 days, after the above-described heat treatment or the skin pass rolling. This treatment causes martensite that formed during the final cooling or skin pass rolling to be tempered and hydrogen that entered the steel sheet during annealing to be removed from the steel sheet. With the low-temperature heat treatment, an amount of hydrogen can be reduced to less than 0.1 ppm. Electrogalvanizing may be performed. In the case where electrogalvanizing is performed, it is preferable that the above-described low-temperature heat treatment be subsequently performed, from the standpoint of reducing the amount of hydrogen present in the steel.

According to examples of the present invention, important indicators of formability for a component having a complex shape in which both stretch forming and stretch flanging are involved can be satisfied; that is, (TS × U. El - 7000) × λ ≥ 140000 can be satisfied in instances in which TS is 590 to 1319 MPa, and (TS × U. El - 7000) × λ ≥ 100000 can be satisfied in instances in which TS is 1320 MPa or greater.

### EXAMPLE 1

Steels having the chemical composition shown in Table 1 were processed under the conditions shown in Table 2-1. Accordingly, steel sheets of the present invention and steel sheets of comparative examples were produced. A sheet thickness of the steel sheets was 1.4 mm. Note that the conditions shown in Table 2-1 do not include galvanizing processes.

A measurement of the microstructure was conducted by using the method described above. The results of the measurement are shown in Table 2-2.

A JIS No. 5 tensile test piece was cut from the obtained steel sheet in a manner such that a direction perpendicular to the rolling direction was the tensile axis, and a tensile test (in accordance with JIS Z 2241) was conducted. TS and U. El are shown in Table 2-2.

Furthermore, stretch flangeability was evaluated by conducting a hole expansion test in accordance with the specification of Japan Iron and Steel Federation Standard JFST 1001. Specifically, a square sample having a size of 100 mm × 100 mm was punched with a punching tool having a punch diameter of 10 mm and a die diameter of 10.3 mm (a clearance of 11%), and subsequently, hole expansion was performed by using a conical punch having an apex angle of 60 degrees, in a manner such that a burr formed in the formation of the punched hole was positioned on an outer side, until a crack extending through the sheet thickness occurred. In this instance, a hole expansion ratio λ (%) was determined as follows: λ (%) = [(d - d₀)/d0] × 100 where do is the initial hole diameter (mm), and d is the hole diameter (mm) at the occurrence of cracking.

In addition, regarding resistance to weld cracking, resistance-welding (spot welding) was performed to evaluate spot weld cracking resistance characteristics. The test pieces used were a test piece having a size of 150 mm × 50 mm (width and length) cut from the 1.4-mm sheet thickness steel sheet and a test piece cut from a hot-dipped galvanized steel sheet of a 590 MPa class. The resistance spot welding was performed on a sheet combination formed of two overlapping steel sheets in a state in which the sheet combination was tilted by 3°, by using a single-phase alternating current (50 Hz) resistance welding machine of a servo-motor-pressurizing type, the servo motor being attached to a welding gun. The welding conditions included an electrode force of 4.0 kN and a hold time of 0.2 seconds. The welding current and the welding time were adjusted such that a nugget diameter became 4 √t mm (t: sheet thickness of a high-strength cold-rolled steel sheet). After the welding, the test piece was cut into halves, and a cross section was examined with an optical microscope. Test pieces in which no cracks measuring 0.20 mm or greater were observed were evaluated as having good resistance to resistance-welding cracking and given a rating of **"O",** and test pieces in which one or more cracks measuring 0.20 mm or greater were observed were evaluated as having low resistance to resistance-welding cracking and given a rating of "x". Note that resistance to weld cracking is expressed as "resistance to resistance-welding cracking" in Table 2-2.

Invention Examples satisfied (TS × U. El - 7000) × λ ≥ 140000 in instances in which TS was 590 to 1319 MPa and satisfied (TS × U. El - 7000) × λ ≥ 100000 in instances in which TS was 1320 MPa or greater, whereas Comparative Examples, in either instance, were inferior. Furthermore, controlling the components to be in the range specified in the present application enables inhibition of spot weld cracking. Note that in Invention Examples, in the instances in which the Si content was less than 1.0%, a crack length was not greater than 0.15 mm, which was particularly good, and in the instances in which the Si content was 0.8% or less, the crack length was not greater than 0.10 mm (and 0 mm or greater), which was extremely good.

Furthermore, in Invention Examples in which the average cooling rate over the temperature range of 750 to 495°C was 15°C/s or greater and 29°C/s or less, a sheet warpage as measured by the following method was 11 to 15 mm, which was a good level. Furthermore, in Invention Examples in which the average cooling rate was 5.0°C/s or greater and 14°C/s or less, the sheet warpage as measured by the following method was not greater than 10 mm, which was an even better level. Note that the sheet warpage used to evaluate the sheet shape was evaluated by using a method in which a cut sample having a product width and a length of 1500 mm was taken from the annealed steel sheet, and the sample was placed on a horizontal flat board, and then warpage heights of the four sides were measured to determine a maximum value (unit: mm) thereof. Note that when the cut sample was cut in a longitudinal direction, the clearance between the blades in a shearing machine was 4% (the upper limit of the management range was 10%).

**[Table 1]**

| Steel No. | Chemical composition (mass%) | | | | | | | | Notes |
|---|---|---|---|---|---|---|---|---|---|
| | C | Si | Mn | P | S | Sol.Al | N | others | |
| A | 0.209 | 1.04 | 2.59 | 0.006 | 0.0003 | 0.035 | 0.0030 | - | Conforming steel |
| B | 0.212 | 0.68 | 2.78 | 0.003 | 0.0005 | 0.180 | 0.0019 | Nb:0.012, Ti:0.007, B:0.0014, Cu:0.2 Ni:0.2 | Conforming steel |
| C | 0.238 | 1.04 | 2.38 | 0.011 | 0.0005 | 0.070 | 0.0035 | - | Comparative steel |
| D | 0.091 | 1.32 | 3.60 | 0.007 | 0.0002 | 0.070 | 0.0044 | - | Comparative steel |
| E | 0.220 | 0.80 | 2.93 | 0.006 | 0.0004 | 0.030 | 0.0035 | Nb:0.02, B:0.0015, Ca₀.0005, V:0.1, Sb:0.009 | Conforming steel |
| F | 0.145 | 0.94 | 2.35 | 0.006 | 0.0004 | 0.030 | 0.0035 | Nb:0.015, Ti:0.011, B:0.0030 | Conforming steel |

| | | | | | | | | | |
|---|---|---|---|---|---|---|---|---|---|
| The underline indicates the value is outside the range of the present invention. | | | | | | | | | |

**[Table 2-1]**

| No. | Steel No. | Hot rolling conditions | | | Cold rolling conditions | Annealing conditions | | | | | | | | | |
|---|---|---|---|---|---|---|---|---|---|---|---|---|---|---|---|
| | | Accumulated rolling reduction ratio for range of 950 to 1100°C (%) | Average cooling rate after finish rolling (°C/s) | Coiling temperature (°C) | Cold rolling reduction ratio (%) | Annealing temperature (°C) | Soaking time (s) | CR1*1 (°C/s) | Holding time ^{*}2 (sec) | CR3*3 (°C/s) | Cooling stop temperature (°C) | Average heating rate *4 (°C/s) | Holding temperatur e(°C) | Holding time *5 (sec) | |
| 1 | A | 66 | 20 | 450 | 55 | 795 | 160 | 15 | 35.0 | 9 | 200 | 7 | 400 | 800 | Invention example |
| 2 | A | 66 | 20 | 450 | 55 | 930 | 160 | 20 | 35.0 | 18 | 260 | 7 | 400 | 800 | Comparative example |
| 3 | A | 66 | 20 | 450 | 55 | 840 | 160 | 2 | 35.0 | 9 | 220 | 7 | 400 | 800 | Comparative example |
| 4 | A | 66 | 20 | 450 | 55 | 795 | 160 | 15 | 13.0 | 9 | 200 | 7 | 400 | 800 | Invention example |
| 5 | A | 66 | 20 | 450 | 55 | 795 | 160 | 15 | 6.5 | 9 | 200 | 7 | 400 | 800 | Comparative example |
| 7 | A | 66 | 20 | 450 | 55 | 795 | 160 | 15 | 14.0 | 2 | 210 | 7 | 400 | 800 | Comparative example |
| 8 | A | 66 | 20 | 450 | 55 | 795 | 160 | 15 | 32.0 | 2 | 210 | 7 | 400 | 800 | Comparative example |
| 9 | A | 66 | 20 | 450 | 55 | 795 | 160 | 25 | 65.0 | 20 | 205 | 25 | 400 | 480 | Invention example |
| 10 | A | 66 | 20 | 450 | 55 | 795 | 160 | 25 | 35.0 | 20 | 300 | 10 | 400 | 480 | Comparative example |
| 11 | A | 66 | 20 | 450 | 55 | 795 | 160 | 80 | 35.0 | 10 | 180 | 10 | 370 | 1200 | Invention example |
| 12 | A | 66 | 20 | 450 | 55 | 795 | 160 | 8 | 300.0 | 9 | 220 | 7 | 400 | 800 | Comparative example |
| 13 | A | 66 | 20 | 450 | 55 | 795 | 180 | 20 | 30.0 | 9 | 200 | 6 | 495 | 35 | Invention example |
| 14 | A | 66 | 20 | 450 | 55 | 795 | 180 | 30 | 35.0 | 10 | 200 | 10 | 400 | 15 | Comparative example |
| 15 | A | 66 | 20 | 450 | 55 | 795 | 180 | 15 | 18.0 | 10 | 200 | 5 | 400 | 800 | Invention example |
| 16 | A | 66 | 20 | 450 | 55 | 795 | 180 | 15 | 10.0 | 10 | 200 | 5 | 400 | 800 | Comparative example |
| 18 | A | 66 | 20 | 450 | 55 | 795 | 180 | 15 | 28.0 | 10 | 200 | 5 | 600 | 800 | Comparative example |
| 19 | A | 66 | 20 | 450 | 55 | 795 | 180 | 15 | 32.0 | 10 | 200 | 5 | 290 | 800 | Comparative example |
| 20 | A | 10 | 20 | 480 | 40 | 805 | 210 | 15 | 15.0 | 20 | 190 | 5 | 400 | 800 | Comparative example |
| 21 | A | 66 | 2 | 550 | 35 | 805 | 210 | 15 | 15.0 | 20 | 190 | 5 | 400 | 800 | Comparative example |
| 22 | B | 74 | 35 | 420 | 48 | 800 | 140 | 20 | 28.0 | 26 | 200 | 5 | 400 | 600 | Invention example |
| 23 | B | 74 | 35 | 420 | 48 | 800 | 140 | 20 | 3.0 | 26 | 200 | 5 | 400 | 600 | Comparative example |
| 24 | B | 55 | 15 | 470 | 48 | 800 | 140 | 20 | 28.0 | 26 | 200 | 5 | 400 | 600 | Invention example |
| 25 | C | 55 | 20 | 450 | 48 | 790 | 150 | 5 | 35.0 | 6 | 200 | 10 | 400 | 600 | Comparative example |
| 26 | D | 55 | 20 | 450 | 48 | 805 | 180 | 15 | 30.0 | 8 | 200 | 15 | 390 | 800 | Comparative example |
| 27 | E | 55 | 20 | 450 | 48 | 790 | 180 | 15 | 30.0 | 20 | 200 | 15 | 380 | 800 | Invention example |
| 28 | F | 45 | 15 | 490 | 45 | 815 | 180 | 15 | 25.0 | 12 | 215 | 5 | 430 | 1000 | Invention example |

| | | | | | | | | | | | | | | | |
|---|---|---|---|---|---|---|---|---|---|---|---|---|---|---|---|
| The underline indicates the value is outside the range of the present invention. *1: Average cooling rate over a temperature range of 750 to 495°C *2: Holding time associated with a temperature range of 495 to 405°C *3: Average cooling rate over a temperature range of 405°C to a cooling stop temperature Tsq, which is given by formula (A) (In a case where cooling is stopped at a temperature higher than Teq, average cooling rate over a temperature range of 405°C to the cooling stop temperature) *4: Average heating rate over a temperature range of the cooling stop temperature to 350°C *5: Holding time associated with a temperature range of 350 to 590°C | | | | | | | | | | | | | | | |

**[Table 2-2]**

| No. | Steel No. | Microstructure | | | | | | Characteristics | | | | | |
|---|---|---|---|---|---|---|---|---|---|---|---|---|---|
| | | Area fraction of ferrite (%) | Area fraction of remaining portion *6 (%) | Volume fraction of retained γ (%) | S_{C-enriched} (%) | S_{γBlock} (%) | Grain diameter of prior γ (µm) | TS (MPa) | U.El (%) | λ (%) | (TS*U.E1-7000)*λ | Resistance to resistance-weldi ng cracking | |
| 1 | A | 7 | 93 | 9.0 | 0.8 | 2 | 4 | 1220 | 9.5 | 48 | 220320 | ○ | Invention example |
| 2 | A | 0 | 100 | 10.0 | 0.9 | 2 | 19 | 1220 | 7.0 | 54 | 83160 | × | Comparative example |
| 3 | A | 9 | 91 | 8.0 | 0.4 | 6 | 4 | 1235 | 9.0 | 29 | 119335 | ○ | Comparative example |
| 4 | A | 7 | 93 | 7.5 | 0.1 | 2 | 4 | 1230 | 8.0 | 50 | 142000 | ○ | Invention example |
| 5 | A | 7 | 93 | 5.0 | 0 | 1 | 4 | 1260 | 7.4 | 52 | 120848 | ○ | Comparative example |
| 7 | A | 7 | 93 | 10.0 | 0.3 | 6 | 4 | 1190 | 8.2 | 38 | 104804 | ○ | Comparative example |
| 8 | A | 10 | 90 | 10.0 | 0.6 | 7 | 4 | 1240 | 8.6 | 32 | 117248 | ○ | Comparative example |
| 9 | A | 10 | 90 | 13.0 | 2.0 | 0 | 4 | 1215 | 11.5 | 41 | 285873 | ○ | Invention example |
| 10 | A | 8 | 92 | 11.0 | 0.6 | 13 | 4 | 1280 | 11.0 | 16 | 113280 | ○ | Comparative example |
| 11 | A | 6 | 94 | 7.2 | 1.4 | 0 | 4 | 1240 | 8.1 | 60 | 182640 | ○ | Invention example |
| 12 | A | 7 | 93 | 11.0 | 1.4 | 6 | 4 | 1250 | 9.8 | 26 | 136500 | ○ | Comparative example |
| 13 | A | 7 | 93 | 9.0 | 0.8 | 5 | 4 | 1230 | 9.2 | 39 | 168324 | ○ | Invention example |
| 14 | A | 8 | 92 | 7.0 | 0 | 3 | 4 | 1220 | 7.4 | 52 | 105456 | ○ | Comparative example |
| 15 | A | 7 | 93 | 8.0 | 0.5 | 3 | 4 | 1220 | 9.0 | 50 | 199000 | ○ | Invention example |
| 16 | A | 7 | 93 | 6.0 | 0 | 3 | 4 | 1242 | 7.7 | 50 | 128170 | ○ | Comparative example |
| 18 | A | 7 | 93 | 1.0 | 0 | 3 | 4 | 1180 | 6.8 | 48 | 49152 | ○ | Comparative example |
| 19 | A | 10 | 90 | 5.0 | 0 | 7 | 4 | 1280 | 7.0 | 62 | 121520 | ○ | Comparative example |
| 20 | A | 7 | 93 | 9.0 | 0.7 | 2 | 14 | 1216 | 7.6 | 48 | 107597 | × | Comparative example |
| 21 | A | 7 | 93 | 9.0 | 0.7 | 2 | 16 | 1214 | 7.2 | 45 | 78336 | × | Comparative example |
| 22 | B | 9 | 91 | 10.4 | 0.7 | 2 | 4 | 1180 | 9.4 | 51 | 208692 | ○ | Invention example |
| 23 | B | 9 | 91 | 8.6 | 0 | 1 | 4 | 1215 | 7.2 | 54 | 94392 | ○ | Comparative example |
| 24 | B | 13 | 87 | 10.2 | 0.6 | 4 | 4 | 1195 | 10.8 | 40 | 236240 | ○ | Invention example |
| 25 | C | 8 | 92 | 11.0 | 1.6 | 4 | 4 | 1200 | 11.0 | 48 | 297600 | × | Comparative example |
| 26 | D | 7 | 93 | 9.0 | 0 | 12 | 4 | 1270 | 7.9 | 29 | 87957 | × | Comparative example |
| 27 | E | 6 | 94 | 9.5 | 0.7 | 2 | 4 | 1350 | 7.4 | 36 | 107640 | ○ | Invention example |
| 28 | F | 25 | 75 | 9.7 | 1.0 | 3.0 | 3 | 1045 | 10.7 | 62 | 259253 | ○ | Invention example |

| | | | | | | | | | | | | | |
|---|---|---|---|---|---|---|---|---|---|---|---|---|---|
| The underline indicates the value is outside the range of the present invention. *6: Constituent formed of one or more of upper bainite, fresh martensite, tempered martensite, lower bainite, and retained γ | | | | | | | | | | | | | |

In Invention Examples of Nos. 1, 4, 9, 11, 13, 15, 22, 24, 27, and 28, (TS × U. El - 7000) × λ ≥ 140000 was satisfied in instances in which TS was 780 to 1319 MPa or (TS × U. El - 7000) × λ ≥ 100000 was satisfied in instances in which TS was 1320 MPa or greater, and no melted portion cracks measuring greater than 0.20 mm were present, whereas in Comparative Examples, one or more of these were inferior.

### EXAMPLE 2

Cold-rolled steel sheets having the chemical composition shown in Table 3 were processed under the annealing conditions shown in Table 4-1. Accordingly, steel sheets of the present invention and steel sheets of comparative examples were produced. A sheet thickness of the steel sheets was 1.4 mm.

Note that some of the steel sheets (cold-rolled steel sheets) were further subjected to a hot-dip galvanizing process to produce hot-dipped galvanized steel sheets (GI). In this instance, the hot-dip galvanizing processing was carried out by immersing the steel sheet in a galvanizing bath at 440°C or higher and 500°C or lower, and subsequently, the coating weight was adjusted by gas wiping or the like. In the hot-dip galvanizing, a galvanizing bath having an Al content of 0.10% or greater and 0.22% or less was used. In addition, after the hot-dip galvanizing process, some of the hot-dipped galvanized steel sheets were subjected to a treatment for alloying the galvanized coating to produce galvannealed steel sheets (GA). In this instance, the treatment for alloying the galvanized coating was carried out in a temperature range of 470°C or higher and 550°C or lower. Some of the steel sheets (cold-rolled steel sheets) were subjected to electrogalvanizing to produce electrogalvanized steel sheets (EG). The microstructure, mechanical characteristics (TS, U. El, and λ) and resistance to weld cracking of the obtained steel sheets were evaluated in a manner similar to that described above. The results are shown in Table 4-2.

**[Table 3]**

| Steel No. | Chemical composition (mass%) | | | | | | | | Notes |
|---|---|---|---|---|---|---|---|---|---|
| | C | Si | Mn | P | S | Sol.Al | N | others | |
| G | 0.179 | 0.99 | 2.67 | 0.008 | 0.0008 | 0.039 | 0.0036 | Nb:0.010, Cu:0.12, Sb:0.010, Mo:0.41 | Conforming steel |

**[Table 4-1]**

| No. | Steel No. | Hot rolling conditions | | | Cold rolling conditions | Annealing conditions | | | | | | | | | | |
|---|---|---|---|---|---|---|---|---|---|---|---|---|---|---|---|---|
| | | Accumulated rolling reduction ratio for range of 950 to 1100°C (%) | Average cooling rate after finish rolling (°C/s) | Coiling temperature (°C) | Cold rolling reduction ratio (%) | Annealing temperature (°C) | Soaking time (s) | CR1 *7 (°C/S) | Holding time *8 (sec) | CR3 *9 (°C/s) | Cooling stop temperature (°C) | Average heating rate *10 (°C/s) | Holding temperature (°C) | Holding time 11 (sec) | Coating *12 | |
| 29 | G | 44 | 8 | 510 | 42 | 860 | 120 | 10 | 15.0 | 6 | 170 | 3 | 550 | 75 | GA | Invention example |
| 30 | G | 44 | 8 | 510 | 42 | 855 | 120 | 12 | 18.0 | 8 | 170 | 3 | 400 | 30 | GI | Invention example |
| 31 | G | 44 | 8 | 510 | 42 | 815 | 160 | 15 | 35.0 | 9 | 230 | 7 | 400 | 800 | EG | Invention example |
| 32 | G | 44 | 8 | 510 | 42 | 890 | 180 | 20 | 30.0 | 7 | 250 | 7 | 400 | 30 | GI | Comparative example |

| | | | | | | | | | | | | | | | | |
|---|---|---|---|---|---|---|---|---|---|---|---|---|---|---|---|---|
| The underline indicates the value is outside the range of the present invention. *7: Average cooling rate over a temperature range of 750 to 495°C *8: Holding time associated with a temperature range of 495 to 405°C *9: Average cooling rate over a temperature range of 405°C to a cooling stop temperature Tsq, which is given by formula (A) (In a case where cooling is stopped at a temperature higher than Teq, average cooling rate over a temperature range of 405°C to the cooling stop temperature) *10: Average heating rate over a temperature range of the cooling stop temperature to 350°C *11: Holding time associated with a temperature range of 350 to 590°C *12: GA: galvannealed steel sheet, GI: hot-dipped galvanized steel sheet (no alloying treatment performed on the galvanized coating), EG: electrogalvanized steel sheet | | | | | | | | | | | | | | | | |

**[Table 4-2]**

| No. | Steel No. | Microstructure | | | | | | Characteristics | | | | | |
|---|---|---|---|---|---|---|---|---|---|---|---|---|---|
| | | Area fraction of ferrite (%) | Area fraction of remaining portion *13 (%) | Volume fraction of retained γ (%) | S_{C-enriched} | S_{γBlock} (%) | Grain diameter of prior γ (µm) | TS (MPa) | U.EI (%) | λ (%) | (TS*U.El-(7000)*λ | Resistance to resistance-welding cracking | |
| 29 | G | 6 | 94 | 12.0 | 0.3 | 3.0 | 8.0 | 1242 | 8.9 | 40 | 162152 | ○ | Invention example |
| 30 | G | 7 | 93 | 13.0 | 0.5 | 3.0 | 7.0 | 1236 | 8.5 | 45 | 157770 | ○ | Invention example |
| 31 | G | 12 | 88 | 14.0 | 1.0 | 5.0 | 4.0 | 1230 | 9.4 | 47 | 214414 | ○ | Invention example |
| 32 | G | 3 | 97 | 8.0 | 0.2 | 2.0 | 15.0 | 1266 | 7.7 | 50 | 137410 | ○ | Comparative example |

| | | | | | | | | | | | | | |
|---|---|---|---|---|---|---|---|---|---|---|---|---|---|
| The underline indicates the value is outside the range of the present invention. *13: Constituent formed of one or more of upper bainite, fresh martensite, tempered martensite, lower bainite, and retained γ | | | | | | | | | | | | | |

In Invention Examples of Nos. 29, 30, and 31, (TS × U. El - 7000) × λ ≥ 140000 was satisfied in instances in which TS was 780 to 1319 MPa or (TS × U. El - 7000) × λ ≥ 100000 was satisfied in instances in which TS was 1320 MPa or greater, and no melted portion cracks measuring greater than 0.20 mm were present, whereas in Comparative Example, one of these was inferior.

### Industrial Applicability

The present invention has very high ductility, excellent stretch flangeability, and excellent weld defect resistance characteristics and can be used via a press forming step for automobiles, home appliances, and the like and thus can be preferably employed for press forming and welding.

## Claims

1. A steel sheet,
the steel sheet having a chemical composition that comprises, in mass%,
C: 0.04 to 0.22%,
Si: 0.4% or greater and less than 1.20%,
Mn: 2.3 to 3.5%,
P: 0.02% or less,
S: 0.01% or less,
sol. Al: less than 1.0%, and
N: less than 0.015%, with a balance of Fe and incidental impurities,
the steel sheet having a microstructure in which
ferrite is present in an amount of 6 to 90% in terms of an area fraction, a constituent formed of one or more of upper bainite, fresh martensite, tempered martensite, lower bainite, and retained γ is present in an amount of 10 to 94% in terms of an area fraction, and retained γ is present in an amount of 3 to 15% in terms of a volume fraction; a total area fraction, denoted as S_{C-enriched}, of regions that have a C concentration of 0.6 to 1.3% and where an adjacent region is formed of upper bainite having a minor axis width of 0.7 to 10 µm, an aspect ratio of greater than 2.0, and a C concentration of 0.07% or less is 0.1 to 5%; a total area fraction, denoted as S_{γBlock}, of fresh martensite having an equivalent circular grain diameter of 1.5 to 15 µm and an aspect ratio of 3 or less and/or retained γ grains having an equivalent circular grain diameter of 1.5 to 15 µm and an aspect ratio of 3 or less is 5% or less (and 0% or greater); and prior γ in a surface layer has a grain diameter of 2 to 12 µm.

2. The steel sheet according to Claim 1, wherein the chemical composition further comprises, in mass%, one or more selected from
Nb: 0.002 to 0.1%,
Ti: 0.002 to 0.1%, and
B: 0.0002 to 0.01%.

3. The steel sheet according to Claim 1 or 2, wherein the chemical composition further comprises, in mass%, one or more selected from
Cu: 0.005 to 1%,
Ni: 0.01 to 1%,
Cr: 0.01 to 1.0%,
Mo: 0.01 to 0.5%,
V: 0.003 to 0.5%,
Zr: 0.005 to 0.2%, and
W: 0.005 to 0.2%.

4. The steel sheet according to any one of Claims 1 to 3, wherein the chemical composition further comprises, in mass%, one or more selected from
Ca: 0.0002 to 0.0040%,
Ce: 0.0002 to 0.0040%,
La: 0.0002 to 0.0040%,
Mg: 0.0002 to 0.0030%,
Sb: 0.002 to 0.1%, and
Sn: 0.002 to 0.1%.

5. The steel sheet according to any one of Claims 1 to 4, wherein the steel sheet has a tensile strength of 590 MPa or greater and 1600 MPa or less.

6. The steel sheet according to any one of Claims 1 to 5, further including a galvanized layer on a surface of the steel sheet.

7. A method for producing a steel sheet,
the method comprising:
in a step of hot rolling, a steel slab having the chemical composition according to any one of Claims 1 to 4 is rolled at an accumulated rolling reduction ratio of 40% or greater within a temperature range of 950 to 1100°C; after finish rolling, a resulting steel sheet is cooled to 520°C or lower at an average cooling rate of 5°C/s or greater and coiled at a coiling temperature of 350 to 520°C; subsequently, the resulting steel sheet is cold-rolled at a cold rolling reduction ratio of 40 to 85%,
subsequently, the cold-rolled steel sheet is annealed at an annealing temperature of 780 to 880°C; thereafter, the resulting steel sheet is cooled through a temperature range of 750 to 495°C at an average cooling rate of 7.0 to 2000°C/s and subsequently held for 13 to 200 seconds through a temperature range of 495 to 405°C; further, the resulting steel sheet is cooled through a temperature range of 405°C to a cooling stop temperature Tsq, which is given by formula (A), at an average cooling rate of 5.0 to 80°C/s; further, the resulting steel sheet is heated through a temperature range of the cooling stop temperature to 350°C at an average heating rate of 2°C/s or greater and held for 20 to 3000 seconds through a temperature range of 350 to 590°C; and subsequently, the resulting steel sheet is cooled to room temperature,
the cooling stop temperature Tsq (°C) being expressed as Ms-50 ≥ Tsq ≥ Ms-180 ...(A)
a martensitic transformation start temperature being expressed as Ms = 539 - 474 × [%C]/(100 - V_{F}) × 100 - 30.4 × [%Mn] × 1.2 - 12.1 × [%Cr] - 7.5 × [%Mo] - 17.7 × [%Ni] ...(B)
where [%C], [%Mn], [%Cr], [%Mo], and [%Ni] represent contents (mass%) of C, Mn, Cr, Mo, and Ni, respectively, and in a case where any of C, Mn, Cr, Mo, and Ni is absent, the content thereof is 0; and V_{F} represents an area fraction (%) of ferrite.
